# EUROPÄISCHE PATENTANMELDUNG

(11) **EP 0 611 712 A2**
(43) Veröffentlichungstag der Anmeldung: **24.08.1994**
(21) Anmeldenummer: 94101956.4
(22) Anmeldetag: 09.02.1994
(51) Int. Cl.: B65G 23/23, B65G 39/20, B65G 21/22

(54) **Kurvenbandförderer mit gurtbandrollenfreiem Traggerüst**

(30) Priorität: 15.02.1993 DE 4304404; 10.07.1993 DE 4323127
(71) Anmelder: E + PK INGENIEURBÜRO, D-53909 Zülpich (DE)
(72) Erfinder: Ecker, Robert, D-52391 Vettweiss (DE); Lintermann, Johannes, D-52064 Aachen (DE); Buderath, Friedhelm, D-53881 Euskirchen (DE)
(74) Vertreter: Schulte, Jörg, Dipl.-Ing.

(57) **Zusammenfassung**

Ein vor allem Übertage einsetzbarer und in beliebiger Länge wirkender Kurvenbandförderer kann vorteilhaft ohne Gurtbandrollen betrieben werden, so daß Walkarbeiten auf das Gurtband nicht einwirken können. Hohe Standzeiten sind die Folge, darüber hinaus aber auch ein ruhigerer, gleichmäßigerer und sicherer Betrieb. Der Antrieb erfolgt entweder über ein seitlich auf das Gurtband einwirkendes Linearmotroantriebssystem, das aus den den Laufradträgern zugeordneten Magneten und dem fest in den Führungskanälen integrierten Statoren besteht oder bei denen in den Führungskanälen beispielsweise eine Zugkette verläuft, die entsprechend mit den Laufradträgern dann verbunden ist. Die Seitenränder des Gurtbandes werden über die Laufradträger erfaßt oder mit diesen so verbunden, daß eine schwenkbewegliche Verbindung erreicht ist. Der Gurt hat durch die Anordnung der Führungskanäle eine vorgegebene Muldung, die somit durch veränderte Anordnung der Führungskanäle den Anforderungen entsprechend ebenfalls verändert werden kann, bis praktisch zu einer geschlossenen Röhre.

## Beschreibung

Die Erfindung betrifft einen Bandförderer mit einem endlosen oder mechanisch verbundenen Gurtband, das in einem Traggerüst um endseitig angeordnete Umlenkrollen geführt ist und über ein längs des Gurtbandes angeordnetes Linearmotorantriebssystem mit dem Gurtband zugeordneten Statoren und Magneten verfügt.

Derartige Bandförderer werden vor allem im untertägigen Berg- und Tunnelbau für den Transport der Kohle und der Berge bzw. des Erzes eingesetzt. Sie werden aber auch übertage zur Förderung der unterschiedlichsten Materialien verwendet. Mit diesen Bandförderern werden erhebliche Entfernungen überbrückt, wobei allerdings die Länge dieser Fördersysteme im untertägigen Bergbau vom Verlauf der Strecken abhängt. Führen diese beispielsweise um eine Kurve oder gar biegen sie rechtwinklig oder in einem anderen Winkel ab, so müssen an diesen Stellen Übergaben eingerichtet werden, was einen teilweise erheblichen Installations- und vor allem auch Wartungsaufwand mit sich bringt. Außerdem stellen die zum Einsatz kommenden Antriebe eine Grenze dar, wobei durch Zuordnung von Zwischenantrieben (ZE "Hebezeuge und Fördermittel" 18, 1978, Seiten 76 - 80) versucht worden ist, die Länge der Bandförderer zu vergrößern und dabei gleichzeitig auch die Beanspruchung des Gurtbandes zu verringern. Es hat sich jedoch gezeigt, daß solche Zwischenantriebe nicht geeignet sind, weil der notwendige Reibwert zwischen den beiden Gurten nicht ausreichend gesichert ist. Weiter sind dezentral eingesetzte Antriebe in Form von Linearmotoren eingesetzt worden, wobei die Permanentmagnetik in die Ränder der Gurtbanddecke eingelassen wurden, die dann von außen um die Kanten des Gurtbandes herumgreifende, in Statoren liegende Elektromagnete in Form eines Linearmotorantriebes angetrieben wurden. Die Versuche wurden eingestellt, weil zum einen die Kräfte auf die beiden Kanten des Gurtbandes nicht gleichmäßig waren und zum anderen, weil die Statoren durch den Fördergurt leicht beschädigt wurden. Darüberhinaus setzt sich in den Spalt zwischen Stator und Fördergurt Staub, so daß der notwendige magnetische Kraftfluß nicht mehr gegeben ist.

Aus der DE-OS 37 41 054 sind Bandförderer mit Linearantrieben bekannt, wobei die Permanentmagnete in einer auf die Unterseite des Gurtbandes aufgesetzte Führungsleiste integriert sind. Die Statoren sind seitlich und auf die Permanentmagnete einwirkend neben der Antriebs- bzw. Führungsleiste angebracht. Neben diesen Antrieben sind außerdem Anhebevorrichtungen in Form von Permanentmagneten und Statoren vorgesehen, wobei die Permanentmagnete in den Rändern des Fördergurtes untergebracht und die Statoren senkrecht darüberstehend vorgesehen sind. Über diese Linearmotoren wird ein Anheben des Gurtes versucht, so daß die Tragrollen eigentlich nur noch Führungsfunktionen erfüllen, da der Gurt praktisch auf dem Magnetkraftpolster schwebt. Der Fördergurt mit integrierten Permanentmagneten muß endseitig des Gurtbandförderers um Umlenkrollen herumgeführt werden, wobei es naturgemäß zu Beanspruchungen und zu Walkprozessen kommt, die diese Teile des Linearmotorantriebes stark beeinträchtigen. Auch das Anheben des Gurtes ist nicht ausreichend, so daß es insbesondere mittig, wo der Fördergurt durch das Fördergut belastet ist, wiederum zu starken Walkarbeiten auf den Gurtbandrollen kommt, so daß ein derartiger Gurt bzw. ein derartiges Gurtband stark eingeschränkte Standzeiten aufweist. Ein Problem kann außerdem die auf die Unterseite aufgebrachte Führungsleiste und Antriebsleiste darstellen, weil an den Umlenkrollen auch diese Teile sehr starker Beanspruchung selbst bei geteilten Umlenkrollen unterliegen. Nachteilig ist außerdem der relativ hohe Preis für die Ausrüstung von Gurtbändern mit derartigen Führungsleisten und die Gefahr, daß sich die Führungsleiste vom Gurt ablöst. Vorteilhaft ist allerdings, daß diese Führungsleisten die Möglichkeit geben, derartige Bänder um Kurven herumzuführen, so daß damit wesentlich größere Förderbandlängen möglich sind.

Der Erfindung liegt nun die Aufgabe zugrunde, einen um Kurven auch mit engem Radius herumzuführenden Bandförderer zu schaffen, dessen Gurtband von der nachteiligen Walkarbeit von Tragrollen freigehalten ist und das hohe Standzeiten gewährleistet.

Die Aufgabe wird erfindungsgemäß dadurch gelöst, daß das Traggerüst beidseitig in Längsrichtung verlaufende und das Gurtband begrenzende Führungskanäle aufweist, deren dem Gurtband abgewandten Rückseite die im Abstand angeordneten Statoren angebracht sind und die zum Gurtband hin eine in Längsrichtung durchgehende Ausnehmung für einen Tragholm einer Führungseinrichtung aufweisen, wobei der Tragholm mit dem Seitenrand des Ober- bzw. Untergurtes verbunden und gegenüberliegend zu den Statoren angeordnete Magnete aufnehmend ausgebildet ist.

Das Gurtband eines derartigen Bandförderers hängt frei zwischen den Führungskanälen, wobei die Führungseinrichtung dafür Sorge zu tragen hat, daß ein glattes Ablaufen und führen gesichert ist. Durch die Entfernung der einzelnen Führungskanäle auf den beiden Seiten des Traggerüstes kann die Muldung des Gurtbandes vorgegeben und auch genau eingehalten werden. Dadurch ist es möglich, die beiden Gurtbänder, d.h. den Ober- und Untergurt relativ dicht zueinander angeordnet zu führen, was vorteilhaft eine geringe Bauhöhe der Gesamtkonstruktion ermöglicht. Möglich ist es sogar, die beiden gegenüberliegenden Führungskanäle so dicht neben einander anzuordnen, daß der Gurt praktisch eine geschlossene Röhre bildet, der aufgrund der starken Muldung hervorragend um Kurven herumgeführt werden kann. Da die Stauchung und Streckung der Gurtbanddecke hierdurch wesentlich verringert wird. Weiter ist es möglich, daß aufgrund der fehlenden Tragrollen ein Gurt im Unter- und Obertrum je nach Platzverhältnissen auch in Querlage gestreckt werden kann, so daß überhaupt keine Muldung entsteht. Vorteilhaft ist, daß ein derartiger Bandförderer keinerlei Gurtbandrollen mehr erfordert, so daß das Gurtband wie erwähnt freischwebend geführt von jeglicher Walkarbeit freigehalten wird, wenn man einmal davon absieht, daß das Gurtband über die Umlenkrollen geführt werden muß, wo aber relativ geringe Kräfte einwirken, weil die Rollen lediglich Führungs- und keine Antriebsfunktionen aufweisen. Die Antriebsleistung wird vielmehr über das Linearmotorantriebssystem übertragen, wobei dieses besonders geschickt und dem vorgesehenen Einsatzzweck optimiert angepaßt ist. Die Statoren sind dem Traggerüst zugeordnet und zwar so, daß sie keine Behinderung darstellen und leicht mit der notwendigen Energie versorgt werden können. Aufgrund ihrer Anordnung auf der Rückseite der jeweiligen Führungskanäle kann der Kraftfluß zwischen Ihnen und dem Magneten immer gesichert ablaufen, so daß die notwendigen Antriebskräfte sicher aufgebracht werden. In der Regel schwebt der Gurt zwischen den einzelnen Linearmotorantriebsteilen auf beiden Seiten des Traggerüstes, ohne daß es zu nachteiliger Reibbelastung und damit Energievernichtung kommen muß. Ein derartiger Bandförderer ist vor allem auch im untertägigen Bereich vorteilhaft einsetzbar, wo relativ große und gleichmäßige Kurven ohne Probleme und elegant durchfahren werden können und wo sich ebenfalls die geringe Bauhöhe vorteilhaft auswirkt.

Nach einer zweckmäßigen Ausbildung ist vorgesehen, daß die Führungseinrichtung als T-förmiger Laufradträger ausgebildet ist, der das dem Tragholm gegenüberliegende Ende bildet und Querbalken zur Aufnahme der Magnete aufweist. Eine derartige Ausbildung bringt vorteilhaft geringe Reibbelastungen, durch die Ausbildung der den Laufradträgern zugeordneten Laufräder und gibt darüber hinaus die Möglichkeit, durch entsprechende Gestaltung der Führungskanäle und auch der Tragholme den Muldungsgrad jeweils einzustellen und zu gewährleisten.

Nach einer zweckmäßigen weiteren Ausbildung der Erfindung ist vorgesehen, daß das Gurtband mit Querverstärkungen ausgerüstet ist. Da auf Längsverstärkungen völlig verzichtet werden kann, wird der Aufbau des Gurtbandes damit wesentlich vereinfacht und auch gleichzeitig preiswerter gestaltet. Die Querverstärkungen sorgen dafür, daß auch bei Belastung durch Fördergut daß Gurtband nicht zu sehr durchhängt, sondern vielmehr gleich geformt über die gesamte Länge ausgebildet ist und damit eine optimale Förderung gewährleistet.

Als zweckmäßig ist dabei anzusehen, daß die Querverstärkungen in einem dem Abstand der Tragholme entsprechenden Abstand in das Gurtband integriert sind, wodurch eine ausreichende Querverstärkung möglich ist, ohne den Aufbau des Gurtbandes zu sehr zu komplizieren.

Auf die Integration der Querverstärkungen kann erfindungsgemäß sogar verzichtet werden, wenn die Querverstärkungen als Verbindungsgurte zwischen den einander gegenüberliegend angeordneten Laufradrädern bzw. Tragholmen ausgebildet und mit der Unterseite von Obergurt und der Oberseite des Untergurtes verbunden sind. Die jeweiligen Querverstärkungen bzw. Verbindungsgurte tragen somit das eigentliche Gurtband, das selbst dann ausgesprochen einfach aufgebaut ist, da es ja nur die Last des Fördergutes tragen muß, während die Versteifung bzw. Verstärkung über die Verbindungsgurte erfolgen.

Eine einfache und zweckmäßige Ausbildung des Traggerüstes ist die, bei der es H-förmig ausgebildet ist und die Führungskanäle am oberen Ende der senkrechten Stützen angeordnet sind. Dabei liegen die Führungskanäle für den Obergurt und den Untergurt relativ dicht beieinander bzw. es ist sogar möglich, sie als eine Baueinheit vorzugeben, zumal sie beide gleich ausgebildet sind. Das Traggerüst selbst ist einfach aufgebaut und kann die notwendigen Lasten problemlos aufnehmen, wobei die Führungskanäle gleichzeitig die Längsverbindungen der H-förmig ausgebildeten Teile darstellen.

Die bei dem bekannten Fördergurten übliche Muldung kann erfindungsgemäß eingestellt und eingehalten werden, wenn die Führungskanäle zum Traggerüst winklig angeordnet sind, wobei eine Winkelstellung von 0 - 90° möglich ist. Je nach Stellung der Führungskanäle können große Mengen an Fördergut transportiert werden. Je nach Gegebenheit kann es auch zweckmäßig sein, daß das Traggerüst schräg angestellte Holme aufweist, an denen die Führungskanäle rechtwinklig zum Gurtband angebracht sind.

Ein problemloses Führen der Seitenränder des Gurtbandes erfolgt gemäß der Erfindung dadurch, daß die als Laufflächen für die Räder der Laufradträger dienenden Flansche der Führungskanäle und die Teilstücke der Querbalken korrespondierend schräg gestellt sind. Ein Kneifen oder Schrägsetzen der Räder bzw. der ihnen zugeordneten Laufwagen ist ausgeschlossen. Insbesondere beim Durchfahren der Kurven ist so eine Belastung durch Reibkräfte weit minimiert, so daß eine Beeinträchtigung nicht gegeben ist. Gemäß der Erfindung ist vorgesehen, daß die Führungskanäle einen Kurvenkanal ergebend dem gewünschten bzw. notwendigen Kurvenradius entsprechend gebogen ausgebildet sind. Dabei ist zwar nachteilig, daß jeweils für die vorgesehene Kurve eine bestimmte Ausbildung der Führungskanäle und des Traggerüstes erforderlich sind, die dann für andere Zwecke in der Regel nicht eingesetzt werden können, doch ist dann ein gleichmäßiger und ruhiger Lauf der Einrichtung bzw. des Gurtbandes auch im Kurvenbereich sichergestellt. Andererseits muß bedacht werden, daß die Kurven insbesondere im untertägigen Bereich in der Regel annähernd genormt sind, so daß derart gebogene Führungskanäle auch für ähnliche Einsatzzwecke dann Wiederverwendung finden können. Denkbar ist es aber auch, daß die Führungskanäle aus kurzen Kanalstücken zusammensetzbar und eine vorgegebene Kurve ergebend miteinander direkt oder über das Traggerüst zu verbinden sind, wobei je nach Kurvenradius die Länge der Führungskanäle und der Traggerüste verringert oder vergrößert werden muß. Dabei kommt es beim Übergang von einem in den anderen Führungskanal eventuell zu kleinen Belastungen, was aber durch die Art der Räder bzw. der Laufradträger so verringert werden kann, daß auch hier eine nennenswerte Beeinträchtigung nicht zu erwarten ist.

Eine günstige Ausbildung des Laufradträgers und eine günstige Zuordnung des Magneten ist dann gegeben, wenn die Laufradträger einen auf V-förmig aneinandergesetzten Teilstücken bestehenden Querbalken aufweisen, der mittig mit einer Halterung für den Magneten ausgerüstet ist. Durch diese Formgebung des Laufradträgers bzw. des Querbalkens ist eine günstige Anordnung des Magneten möglich, der ja mit den auf der Rückseite der Führungskanäle angeordneten Statoren korrespondierend wirken soll und durch diese Formgebung eine immer gleiche Position einnimmt. Außerdem werden die Räder, wenn sie angesprochen sind, so gleichmäßig und sicher geführt und finden die notwendige Lauffläche. Neben der geschilderten Ausbildung und Anordnung der Magnete am Querbalken ist auch die Möglichkeit gegeben, daß der Magnet auf einer Schmalseite hochkant stehend und zwischen zwei Statoren reichend angeordnet ist. Dadurch werden besonderes große Einwirkflächen zur Verfügung gestellt, was insbesondere bei längeren Bändern oder bei etwas größeren Abständen der einzelnen Linearmotorantriebssysteme von Vorteil ist.

Um ein Entgleisen bzw. eine gezielte gleichmäßige Führung der Räder zu gewährleisten, sieht die Erfindung vor, daß die Rückseite der Führungskanäle eine zur Innenseite vorstehende Nut oberhalb eines der Räder aufweist. Hierdurch werden Momente günstig abgefangen und eine flexible Trassenführung ermöglicht. Auch beim Verkanten würde somit das Rad sicher geführt, so daß der Magnet nicht gegen die Rückseite gedrückt wird bzw. abreißt bzw. aufgrund der Schrägstellung die notwendigen Antriebskräfte nicht zu übertragen sind.

Eine Überbeanspruchung der Ränder des Gurtbandes und gleichzeitig eine sichere Führung und Fixierung werden gemäß der Erfindung dadurch gesichert, daß das freie Ende des Tragholms gelenkig mit dem Seitenrand des Gurtbandes verbunden ist. Damit wird das Gurtband unabhängig von der jeweiligen Belastung im Randbereich nicht überlastet, sondern vielmehr kann der Seitenrand etwas gegenüber dem Tragholm abknicken, ohne daß eine Beeinträchtigung oder gar Überbeanspruchung erfolgt. Gleichzeitig ist damit auch die Überbeanspruchung des Tragholmes bzw. des gesamten Laufradträgers ausgeschlossen. Um diese gelenkige Verbindung zu erreichen, sieht die Erfindung vor, daß das Gurtband über eine Klemmvorrichtung mit dem Tragholm gelenkig verbunden ist, wobei diese Klemmvorrichtung je Tragholm eine entsprechende Länge aufweist, so daß punktuelle Belastungen des Gurtes bzw. seines Seitenrandes ausgeschlossen werden. Die Krafteinleitung erfolgt vielmehr über eine entsprechende Länge, so daß die Fixierungen hohe Standzeiten sichern.

Eine sichere und gleichzeitig optimale Gelenkigkeit ergebende Verbindung ist die, bei der die Klemmvorichtung und der Tragholm scharnierartig ineinanderfassende Zähne aufweisen, durch die eine quer und damit parallel zum Seitenrand verlaufende Schwenkachse hindurchgeführt ist. Diese Ausbildung hat darüber hinaus den Vorteil, daß sie recht stabil und gegen Staub und Dreck unempfindlich ist, was gerade beim Massenguttransport erhebliche Vorteile mit sich bringt. Die fortlaufende Beweglichkeit in diesem Scharniergelenk würde eventuell auftretende Verschmutzungen immer wieder lösen, so daß quasi eine selbstreinigende Gelenkverbindung vorgegeben ist.

Statt der Linearmotorantriebsvariante ist gem. der Erfindung auch eine weitere möglich, bei der nämlich das dem Rand des Gurtes zugeordnete Antriebssystem dadurch gekennzeichnet ist, daß das Traggerüst beidseitig in Längsrichtung verlaufend und das Gurtband begrenzende Führungskanäle aufweist, in denen als Antriebssystem eine Zugkette verläuft, die zum Gurtband hin offen sind und über einen Tragholm mit dem Seitenrand des Ober- und Untergurtes verbunden sind. Hier werden die Zugkräfte im wesentlichen der Zugkette oder auch einem Seil o.ä. Zugaggregat zugeordnet, das sie aufgrund der gelenkigen Verbindung mit dem Seitenrand des Ober- und Untergurtes sicher überträgt, wobei insbesondere auch die Zugkette mit Antrieben versorgt werden kann, die im untertägigen Bergbau, beispielsweise im Hobelbetrieb zum Einsatz kommen. Die Zugkette hat darüber hinaus den Vorteil, daß auch die einzelnen Glieder gelenkig miteinander verbunden sind, wobei hier die Führungskanäle den Auftrag haben, die Zugkette einmal zu führen und zum anderen als Schutz zu wirken, da diese Führungskanäle ja rundum geschlossen werden können mit Ausnahme des Schlitzes zum Austreten des Tragholmes oder des Verbindungsteils mit dem Seitenrand des Gurtes.

Ein ruhiger Verlauf der Zugkette und damit des gesamten Förderers wird insbesondere dadurch gewährleistet, daß die Zugkette in Laufwagen gelagert ist, die in den Führungskanälen vorzugsweise an deren Flanken abrollende Räder aufweisen.

Die Erfindung zeichnet sich insbesondere dadurch aus, daß ein Kurvenbandförderer geschaffen ist, der ohne schädliche Beanspruchung durch Gurtbandrollen auch über große Längen einsetzbar ist, wobei vorteilhafterweise auch noch auf Längsverstärkungen im Gurtband verzichtet werden kann. Damit ist der Aufbau einfach und durch das zum Einsatz kommende Linearmotorantriebssystem praktisch reibungsfrei, was gerade im untertägigen Bereich einen sehr umfangreichen Einsatz ermöglicht. Vorteilhaft ist weiter, daß ein verhältnismäßig einfach aufgebautes Traggerüst zum Einsatz kommt, das bei entsprechender Formgebung oder Ausbildung das Durchfahren relativ enger Kurven möglich macht. Dazu werden am Gurtband selbst Zusatzeinrichtung nicht erforderlich. Vielmehr erfolgt die Führung um Kurven mit den auch für das Antriebssystem benötigen Laufradträgern bzw. dem Linearmotorantriebssystem. Die zum Einsatz kommenden Laufradträger sichern einen immer gleichen Abstand zwischen Stator und Magnet, so daß ein derartiges Linearmotorantriebssystem auch voll wirksam ist. Das Gurtband ist durch die Führungskanäle und den Laufradträger jeweils so gemuldet geführt, daß es optimale Fördergutmengen transportieren kann. Vorteilhaft ist weiter, daß eine Reinigung entfällt, da eine Verschmutzung des Fördergurtes insbesondere auf der Unterseite nicht eintreten kann, weil hier ja die bisher üblichen Stützrollen wegfallen. Allein dies verringert den sonst recht hohen Wartungsaufwand, wobei wie schon erwähnt die Möglichkeit insbesondere auch beim Untergurt gegeben ist, den Gurt aufgrund der Platzverhältnisse in Querlage zu strecken oder aber auch in engeren Kurven soweit zu mulden, daß praktisch eine geschlossene Pipeline entsteht. Die mit der Erfindung zu erzielenden Vorteile sind enorm groß.

Weitere Einzelheiten und Vorteile des Erfindungsgegenstandes ergeben sich aus der nachfolgenden Beschreibung der zugehörigen Zeichnung, in der ein bevorzugtes Ausführungsbeispiel mit den dazu notwendigen Einzelheiten und Einzelteilen dargestellt ist. Es zeigen:
- Fig. 1: eine perspektivische Wiedergabe des Kurvenbandförderers,
- Fig. 2: eine Vorkopfansicht des Traggerüstes mit dem Gurtband,
- Fig. 3: eine perspektivische Ansicht der Darstellung nach Fig. 2,
- Fig. 4: einen Schnitt durch einen Führungskanal,
- Fig. 5: die gelenkige Verbindung zwischen den Laufradträgern und dem Gurtband,
- Fig. 6: eine Ausführung des Gurtbandes mit Verbindungsgurten zwischen den beidseitig angeordneten Laufradträgern und
- Fig. 7: die Ausbildung nach Fig. 6, nur mit zwischen die Statoren reichenden Magneten.

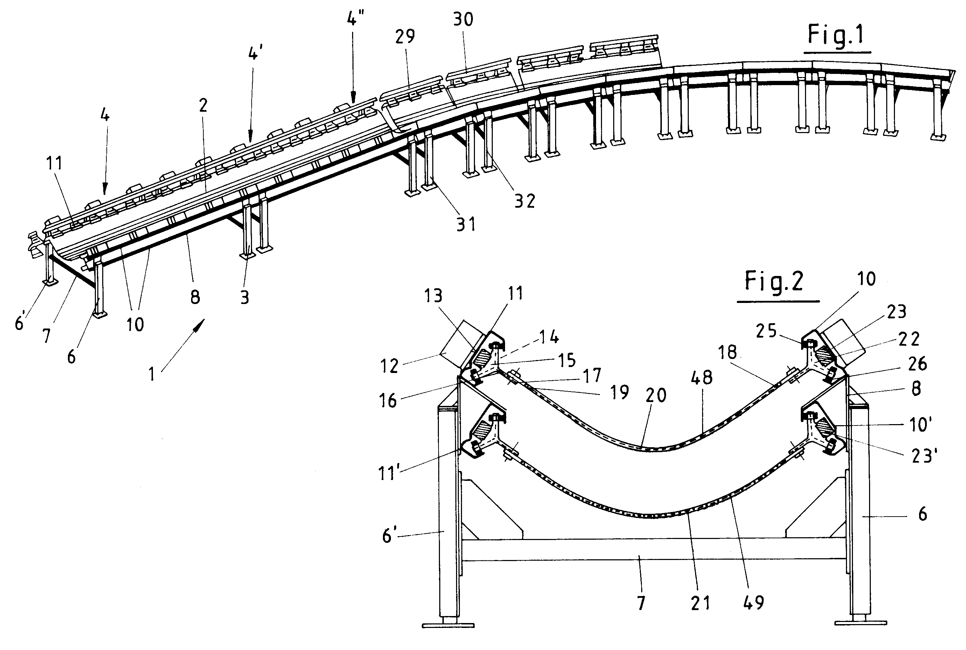

Fig. 1 zeigt einen perspektivisch wiedergegebenen Kurvenbandförderer 1, dessen Gurtband 2 im Traggerüst 3 um die hier nur angedeutete Kurve herumgeführt wird, ohne daß es zu den als Flizebogeneffekt bekannten Phänomen kommt, bei dem das Gurtband 2 versucht, immer wieder in den geraden Verlauf zurückzuschnellen. Angetrieben wird das Gurtband 2 über ein Linearmotorantriebssystem 4, das seitlich des Gurtbandes 2 angeordnet und wirksam ist. Dieses Linearmotorantriebssystem 4, 4', 4'' besteht aus einer Vielzahl von Statoren und Magneten, wobei die Statoren dem Traggerüst 3 und die Magnete dem Gurtband 2 zugeordnet sind.

Das Traggerüst 3 besteht aus zwei senkrechten Stützen 6 und der waagerechten Strebe 7, wobei die Längsstrebe 8 von Führungskanälen 10 und 11 gebildet sind. Diese Führungskanäle 10 dienen gleichzeitig der Führung des Gurtbandes 2, was weiter hinten noch näher erläutert wird. Dabei gibt es einen oberen und unteren Führungskanal 10 und 11, weil das Gurtband 2 um die nicht hier dargestellten Umlenkrollen zurückgeführt wird, so daß ein endloses Gurtband 2 entsteht.

Fig. 2 zeigt eine Vorkopfansicht bzw. einen Schnitt durch den Kurvenbandförderer 1, wobei deutlich wird, daß die Führungskanäle 10, 10' und 11, 11' zusammen mit der senkrechten Stütze 6, 6' und der waagerechten Strebe 7 das stabile Traggerüst 3 bilden. Dabei trägt dieses Traggerüst 3 auch die Statoren 12, die auf der Rückseite 13 der Führungskanäle 10, 11, wie in Fig. 2 gezeigt angeordnet sind.

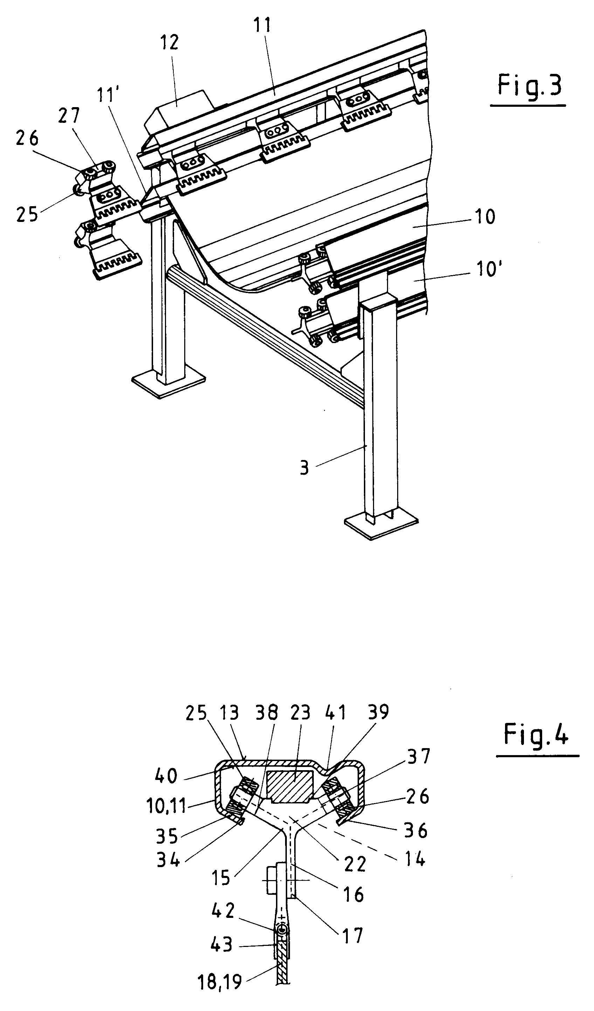

Auf der gegenüberliegenden Seite des Stators 12 weisen die Führungskanäle 10, 11 eine längs durchgehende Ausnehmung 14 auf, durch die der Laufradträger 15 mit dem Tragholm 16 und den Rädern 25, 26 hindurchgreift. Die Räder 25, 26 sind, wie Fig. 4 insbesondere verdeutlicht, dabei so angeordnet und geführt, daß sie gleichmäßig auf bzw. in den Führungskanälen 10, 11 abrollen können, wenn aufgrund von entsprechender Belastung oder aber bei ausgefallenem Linearmotorantriebssystem 4 ihre Wirksamkeit gefordert ist.

Das freie Ende 17 des Laufradträgers 15 ist mit den Seitenrändern 18, 19 des Gurtbandes 2 verbunden und zwar wie weiter hinten noch erläutert wird, so gelenkig verbunden, daß eine Überbeanspruchung der Seitenränder 18, 19 nicht auftreten kann. Sowohl der Obergurt 20 wie der Untergurt 21 werden auf diese Art und Weise einerseits gespannt und andererseits gemuldet, wie Fig. 2 und auch Fig. 3 verdeutlicht. Dadurch ist es möglich, in der Mulde des Obergurtes 20 eine entsprechende Menge an Fördergut zu transportieren und gleichzeitig den Untergurt 21 in dichtem Abstand darunter anzuordnen, wodurch die aus Fig. 2 ersichtliche günstige Bauhöhe möglich wird.

Der Antrieb erfolgt, wie schon erwähnt, über das Linearmotorantriebssystem 4 mit dem Stator 12 und dem Magneten 23, wobei der Magnet 23 auf bzw. in den Querbalken 22 des Tragholms 16 integriert bzw. daran fixiert ist. Auf diese Weise wird ein immer gleicher Abstand von Stator 12 und Magnet 23 gewährleistet.

Fig. 3 zeigt die Verbindung zwischen dem Laufradträger 15 bzw. dem Tragholm 16 und den Seitenrändern 18, 19 des Gurtbandes 2. Gezeigt ist auch die Ausbildung und Anordnung der Räder 25, 26, die nämlich einem Laufwagen 27 zugeordnet sind, der für ein gleichmäßiges Abrollen auf der Lauffläche 34 der Flansche 35, 36 Sorge trägt.

Um entsprechende Kurven durchfahren zu können, sind gemäß Fig. 1 Kanalteilstücke 29, 30 vorgesehen, die entsprechend korrespondierend ausgebildeten Traggerüsten 31, 32 zugeordnet sind. Dies ist eine Möglichkeit, um eine entsprechende Kurve zu durchfahren, wobei es natürlich auch möglich ist, die Führungskanäle 10, 11 bogenförmig auszubilden, um so eine gleichmäßige und kontinuierliche Führung des Gurtbandes 2 auch um Kurven herum sicherzustellen.

Fig. 4 zeigt einen Schnitt durch einen der Führungskanäle 10 bzw. 11 und eine Vorkopfansicht eines der Laufwagen 27 bzw. der Laufradträger 15. Dieser Laufradträger 15 besteht, wie Fig. 4 verdeutlicht, aus zwei winklig zueinander angesetzten Teilstücken 37, 38, die gemeinsam den Querbalken 22 bilden. Durch die winklige Anordnung ergibt sich eine günstige Möglichkeit für die Anordnung einer Halterung 39 am Querbalken 22 für den Magnet 23.

Zur Sicherung des Laufradträgers 15 im Führungskanal 10 bzw. 11 ist auf der Rückseite 13 eine zur Innenseite 40 vorspringende Nut 41 so ausgebildet, daß im Zweifelsfall das zugeordnete Rad 26 sich auf bei entsprechendem Verkanten daran abstützen kann, ohne daß die Gefahr besteht, daß der Magnet 23 mit der Rückseite 13 in Berührung kommt. Eine Beschädigung oder gar ein Abschleifen des Magnetes 23 wird so vermieden.

Weiter vorne ist bereits im Zusammenhang mit Fig. 2 und Fig. 3 darauf hingewiesen worden, daß eine Gelenkverbindung 42 vorgesehen ist, um eine Überbeanspruchung des Gurtbandes 2 im Verbindungsbereich mit den Laufradträgern 15 zu vermeiden. Diese Gelenkverbindung 42 verfügt über eine Klemmvorrichtung 43, die auf die Seitenränder 18, 19 des Gurtbandes 2 aufgeklemmt sind und die Zähne 44 aufweisen, die mit den Zähnen 45 des freien Endes 17 des Tragholmes 16 korrespondierend ausgebildet sind, so daß nach Durchschieben einer Schwenkachse 46 sich die gewünschte Gelenkverbindung 42 ergibt. Damit kann es auch bei entsprechender Belastung des Gurtbandes 2 nicht zu Beschädigungen im Randbereich bzw. des Seitenrandes 18, 19 kommen.

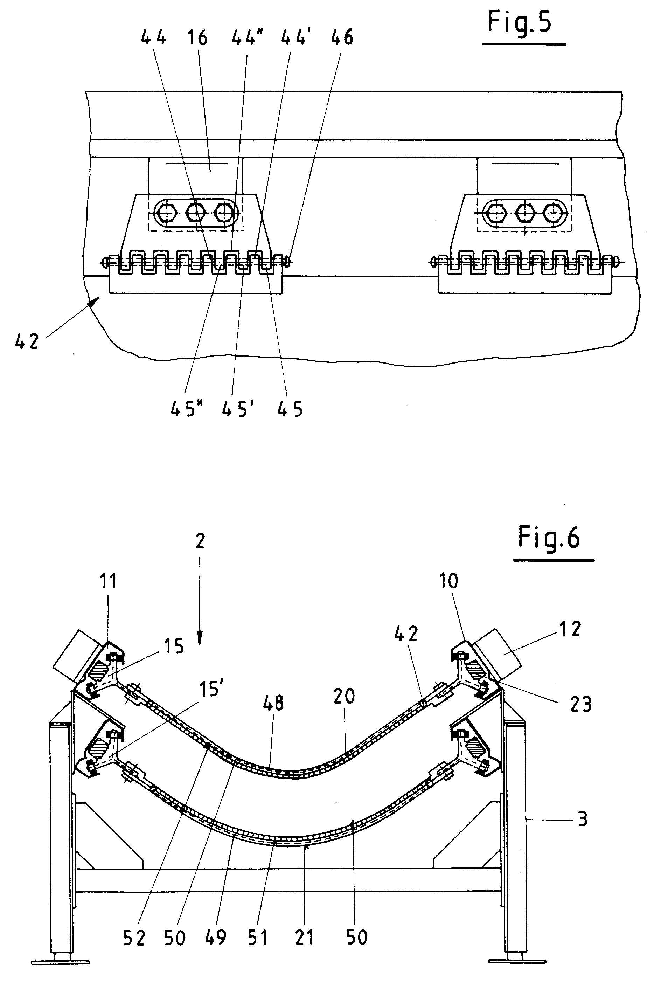

Fig. 6 und auch Fig. 2 zeigen, daß das Gurtband 2 mit Querverstärkungen 48, 49 ausgerüstet ist und zwar insbesondere im Bereich der Laufradträger 15 bzw. der Tragholme 16. Übrigens zu erwähnen ist noch, daß die Verbindung zwischen dem Laufradträger 15 und dem Seitenrand 18 bzw. 19 jeweils über eine entsprechende Breite oder Länge erfolgt, so daß eine punktuelle Belastung durch das Anklemmen und die Übertragung der Kräfte nicht auftreten können.

Die Querverstärkungen 48, 49 sind nach Fig. 2 in das Gurtband 2 integriert, während nach Fig. 6 Verbindungsgurte 50 vorgesehen sind, die von außen auf das Gurtband 2 aufgebracht, vorzugsweise aufgeklebt werden. Bei der aus Fig. 6 dargestellten Ausbildung wird deutlich, daß beim Obergurt 20 dieser Verbidungsgurt 50, der ja in Querrichtung verläuft, auf der Unterseite 52 angeordnet ist, während er bei dem Untergurt 21 auf der Oberseite 51 verläuft, so daß er während der Transportfahrt keine Behinderung für das Fördergut darstellt, während bei dem Reinigen des Untergurtes wiederum die Unterseite frei bleibt, so daß hier ein einwandfreier evtl. notwendig werdender Reinigungsprozeß vorgenommen werden kann.

Die Ausbildung nach Fig. 6 hat den Vorteil, daß ggf. Nachrüstungen von Gurtbändern 2 möglich sind, während die integrierte Anordnung die Möglichkeit bietet, das Gurtband 2 jeweils beliebig einzusetzen, also ohne beachten zu müssen, daß ja die jeweilige Oberseite des Obergurtes 20 freibleiben muß, um evtl. Benachteiligungen beim Fördern von Massengut zu verhindern. Andererseits kann je nach Neigung des Kurvenbandförderers unter Umständen sogar durch die Verbindungsgurte 50 die Möglichkeit gegeben werden, auch gewisse Steigungen der Strecke ohne Probleme zu überwinden.

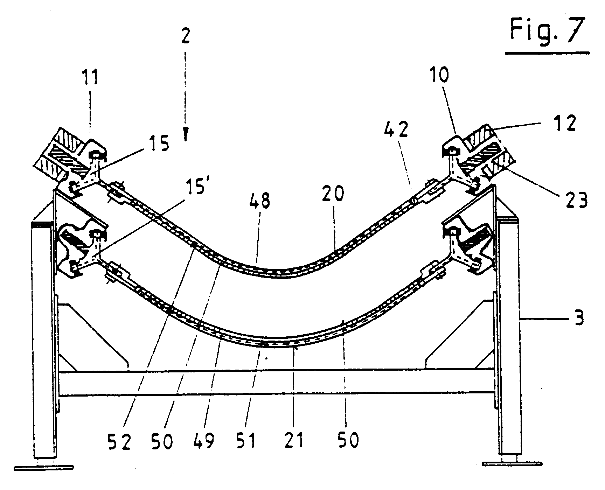

Fig. 7 zeigt in Abwandlung des Antriebssystems nach Fig. 6 auf einer Schmalseite aufstehende Magnete 23, die zwischen die beiden Statoren oder Statorenhälften geführt sind, so daß sich große Berührungsflächen ergeben, was für die Übertragung der notwendigen Antriebssysteme vorteilhaft ist. Da bei dem hier dargestellten Beispiel der Untergurt 21 nicht gesondert angetrieben ist, muß hier das Gehäuse des Führungskanals 10, 11 etwas geändert werden, um dem hochkant stehenden Magnet 23 den notwendigen Schutz zu geben.

Nicht dargestellt ist die Ausführung, wo die seitlichen Statoren und Magnete durch ein anderes Antriebssystem, beispielsweise eine Zugkette ersetzt sind. Diese Zugkette verläuft ebenfalls in den Führungskanälen 10, 11 von Ober- und Untergurt, wobei die übrigen Teile, insbesondere auch die Laufradträger 15 bei behalten werden können, nur daß statt des Magneten eine Verbindung mit der umlaufenden Zugkette vorgesehen ist.

Alle genannten Merkmale, auch die den Zeichnungen allein zu entnehmenden, werden allein und in Kombination als erfindungswesentlich angesehen.

## Patentansprüche

1. Bandförderer mit einem endlosen oder mechanisch verbundenen Gurtband, das in einem Traggerüst um endseitig angeordnete Umlenkrollen geführt ist und über einen längs des Gurtbandes angeordnetes Linearmotorantriebssystem mit dem Gurtband zugeordneten Statoren und Magneten verfügt,
**dadurch gekennzeichnet**,
daß das Traggerüst (3) beidseitig in Längsrichtung verlaufende und das Gurtband (2) begrenzende Führungskanäle (10, 11) aufweist, auf deren dem Gurtband abgewandten Rückseite (13) die im Abstand angeordneten Statoren (12) angebracht sind und die zum Gurtband hin eine in Längsrichtung durchgehende Ausnehmung (14) für einen Tragholm (16) einer Führungseinrichtung (15) aufweisen, wobei der Tragholm mit dem Seitenrand (18, 19) des Ober- (20) bzw. Untergurtes (21) verbunden und gegenüberliegend zu den Statoren (12) angeordnete Magnete (23) aufnehmend ausgebildet ist.

2. Bandförderer nach Anspruch 1,
**dadurch gekennzeichnet**,
daß die Führungseinrichtung (15) als T-förmiger Laufradträger ausgebildet ist, der das dem Tragholm (16) gegenüberliegende Ende (17) bildet und Querbalken (22) zur Aufnahme der Magnete (23) aufweist.

3. Bandförderer nach Anspruch 1,
**dadurch gekennzeichnet**,
daß das Gurtband (2) mit Querverstärkungen (48, 49) ausgerüstet ist.

4. Bandförderer nach Anspruch 3,
**dadurch gekennzeichnet**,
daß die Querverstärkungen (48, 49) in einem dem Abstand der Tragholme (16) entsprechenden Abstand in das Gurtband (2) integriert sind.

5. Bandförderer nach Anspruch 3,
**dadurch gekennzeichnet**,
daß die Querverstärkungen (48, 49) als Verbindungsgurte (50) zwischen den einander gegenüberliegend angeordneten Laufradträgern (15) bzw. Tragholmen (16) ausgebildet und mit der Unterseite (52) von Obergurt (20) und der Oberseite (51) des Untergurtes (21) verbunden sind.

6. Bandförderer nach Anspruch 1,
**dadurch gekennzeichnet**,
daß das Traggerüst (3) H-förmig ausgebildet ist und die Führungskanäle (10, 11) am oberen Ende der senkrechten Stütze (6) trägt.

7. Bandförderer nach Anspruch 1 und Anspruch 6,
**dadurch gekennzeichnet**,
daß die Führungskanäle (10, 11) zum Traggerüst (3) winklig angeordnet sind.

8. Bandförderer nach Anspruch 1,
**dadurch gekennzeichnet**,
daß das Traggerüst (3) schräg angestellte Holme aufweist, an denen die Führungskanäle (10, 11) rechtwinklig zum Gurtband (2) angebracht sind.

9. Bandförderer nach Anspruch 1 und Anspruch 7 oder Anspruch 8,
**dadurch gekennzeichnet**,
daß die als Laufflächen (34) für die Räder (25, 26) der Laufradträger (15) dienenden Flansche (35, 36) der Führungskanäle (10, 11) und die Teilstücke (37, 38) der Querbalken (22) korrespondierend schräggestellt sind.

10. Bandförderer nach Anspruch 1,
**dadurch gekennzeichnet**,
daß die Führungskanäle (10, 11) einen Kurvenkanal ergebend dem gewünschten bzw. notwendigen Kurvenradius entsprechend gebogen ausgebildet sind.

11. Bandförderer nach Anspruch 1,
**dadurch gekennzeichnet**,
daß die Führungskanäle (10, 11) aus kurzen Kanalstücken (29, 30) zusammensetzbar und eine vorgegebene Kurve ergebend miteinander direkt oder über das Traggerüst (3, 31, 32) zu verbinden sind.

12. Bandförderer nach Anspruch 1 und Anspruch 7,
**dadurch gekennzeichnet**,
daß die Laufradträger (15) einen aus V-förmig aneinandergesetzten Teilstücken (37, 38) bestehenden Querbalken (22) aufweisen, der mittig mit einer Halterung (39) für den Magneten 823) ausgerüstet ist.

13. Bandförderer nach Anspruch 1 oder Anspruch 12,
**dadurch gekennzeichnet**,
daß der Magnet (23) auf einer Schmalseite hochkant stehend und zwischen zwei Statoren (12) reichend angeordnet ist.

14. Bandförderer nach Anspruch 1,
**dadurch gekennzeichnet**,
daß die Rückseite (13) der Führungskanäle (10, 11) eine zur Innenseite (40) vorstehende Nut (41) oberhalb eines der Räder (25; 26) aufweist.

15. Bandförderer nach Anspruch 1,
**dadurch gekennzeichnet**,
daß das freie Ende (17) des Tragholms (16) gelenkig mit dem Seitenrand (18, 19) des Gurtbandes (2) verbunden ist.

16. Bandförderer nach Anspruch 15,
**dadurch gekennzeichnet**,
daß das Gurtband (2) über eine Klemmvorrichtung (43) mit dem Tragholm (16) gelenkig verbunden ist.

17. Bandförderer nach Anspruch 15 und Anspruch 16,
**dadurch gekennzeichnet**,
daß die Klemmvorrichtung (43) und der Tragholm (16) scharnierartig ineinanderfassende Zähne (44, 45) aufweisen, durch die eine quer und damit parallel zum Seitenrand (18, 19) verlaufende Schwenkachse (46) hindurchgeführt ist.

18. Bandförderer mit einem endlosen oder mechanisch verbundenen Gurtband, das in einem Traggerüst um endseitig angeordnete Umlenkrollen geführt ist und über ein längs des Gurtbandes angeordnetes Antriebssystem verfügt,
**dadurch gekennzeichnet**,
daß das Traggerüst (3) beidseitig in Längsrichtung verlaufend und das Gurtband (2) begrenzende Führungskanäle (10, 11) aufweist, in denen als Antriebssystem eine angetriebene Zugkette verläuft, die zum Gurtband (2) hin offen sind und über einen Tragholm (6) mit dem Seitenrand (18, 19) des Ober- und Untergurtes (19, 20) verbunden sind.

19. Bandförderer nach Anspruch 18,
**dadurch gekennzeichnet**,
daß die Zugkette im Laufwagen gelagert ist, die in den Führungskanälen (10, 11) vorzugsweise an deren Flanken abrollende Räder aufweist.
